# EUROPÄISCHE PATENTANMELDUNG

(11) **EP 1 380 782 A2**
(43) Veröffentlichungstag der Anmeldung: **14.01.2004**
(21) Anmeldenummer: 03090206.8
(22) Anmeldetag: 08.07.2003
(51) Int. Cl.: F16K 31/56

(54) **Schaltvorrichtung für ein ohne Hilfsenergie arbeitendes Sicherheitsabsperrventil**

(30) Priorität: 09.07.2002 DE 10231904
(71) Anmelder: RMG-Gaselan Regel + Messtechnik GmbH, 15517 Fürstenwalde (DE)
(72) Erfinder: May, Günter, 15344 Strausberg (DE)
(74) Vertreter: COHAUSZ DAWIDOWICZ HANNIG & PARTNER

(57) **Zusammenfassung**

Der Erfindung liegt die Aufgabe zugrunde bei einem Sicherheitsabsperrventil die Höhe der Schaltkräfte für die Auslösung des Ventils bei nahezu reiner Rollreibung unter gleichzeitiger Minimierung der Baugröße der für die Schaltkräfte relevanten Baugruppen herabzusetzen, den Standardisierungsgrad durch Reduzierung der Typen zu erhöhen und den technologischen Aufwand zu senken.
Gelöst wird diese Aufgabe dadurch, dass zwischen den Verriegelungselementen (23) und den Widerlagerkörpern (28) in einem drehbaren hülsenförmigen Käfig (7) geführte, diametral gegenüberliegende Wälzkörper (24) zum Übertragen der radialen Schaltkräfte auf die Widerlagerkörper (28) so angeordnet sind, und dass die Verriegelungselemente (23), Wälzkörper (24) und Widerlagerkörper (28) in ihren Berührungslinien (K1 und K2) um eine durch die Mittelpunkte (M1,M2,M3) der Verriegelungselemente (23), Wälzkörper (24), Widerlagerkörper (28) und dem Drehpunkt (P) der Welle (K) geführte Achse (C-C) justierbar ist.

## Beschreibung

Die Erfindung betrifft eine Schaltvorrichtung für ein ohne Hilfsenergie arbeitendes Sicherheitsabsperrventil, mit einer in einem mit Boden und Deckel versehenen Gehäuse drehbar gelagerten und eine Ventilklappe tragenden Welle, einer die Welle verriegelnden Rasteinrichtung, die eine zur Welle koaxial angeordnete und mit dieser drehfest verbundene zylindrische Rastbuchse, welche zwei axial verlaufende, im Mantel der Buchse, diametral gegenüberliegende Ausnehmungen zur Aufnahme von walzenförmigen, in einem Schlitzzylinder geführten Verriegelungselementen aufweist, und ein drehbewegliches hohlzylindrisches Schaltorgan enthält, an dessen innerer Mantelfläche axial verlaufende, den Verriegelungselementen zugeordnete Widerlagerkörper vorgesehen sind, und mindestens einem mit dem Schaltorgan mechanisch gekuppelten Auslöser.
Aus der DE 23 03 715 A1 ist ein gattungsgemäßes selbsttätiges Sicherheitsabsperrventil, insbesondere für Druckregelanlagen, bekannt, dessen klappenförmig ausgebildetes Verschlussstück auf einer in Umfangsrichtung federbelasteten Welle angeordnet ist. In der Offenstellung ist das Verschlussstück mittels einer Rasteinrichtung verriegelbar und mittels einer die Rasteinrichtung entriegelnden Auslöseinrichtung betätigbar. Die Rasteinrichtung besteht aus einer die Welle koaxial umgebenden gehäusefesten Führungsbuchse, die mit mindestens zwei axial verlaufenden Ausnehmungen versehen ist, mindestens zwei umfangsverteilt in den Ausnehmungen der Führungsbuchse angeordneten Schaltwalzen, einem die Führungsbuchse koaxial umgebenden, im Gehäuse drehbeweglich angeordneten hohlzylindrischen Schaltlager, dessen innere Mantelfläche mit Schaltnocken versehen ist, und auf der Welle angeordneten, axial verlaufenden Nuten zur Aufnahme der Schaltwalzen in der Ventiloffenstellung.
Dieses bekannte Sicherheitsabsperrventil hat den Nachteil, dass bei Erreichen der Ansprechwerte an den Verriegelungselementen Haft- und Gleitreibungskräfte zu überwinden sind, die in Abhängigkeit von der Größe des an der Welle anliegenden Drehmomentes beträchtliche Beträge erreichen, was entweder große Messwerke für kleine Ansprechdrücke oder die Einschränkung des Führungsgrößenbereiches auf größere Sollwerte oder den Einsatz von Kraftverstärkern erforderlich macht, wodurch ein höherer technologischer Aufwand entsteht und eine Einhandbetätigung zum Öffnen des Sicherheitsabsperrventil nicht möglich ist.
Nachteilig ist ferner, dass in Abhängigkeit von der Baugröße des jeweiligen Sicherheitsabsperrventils mehrere verschieden große Schaltgeräte notwendig sind.
Die erheblichen Haft- und Gleitreibungskräfte beeinflussen des Weiteren die Zuverlässigkeit dieser bekannten Sicherheitsabsperrventile nachteilig.

Die DD 0 152 178 A offenbart ein ohne Hilfsenergie und Hilfsgas arbeitendes Schnellschlussventil mit einer im Gehäuse drehbar gelagerten und die Ventilklappe tragenden Stellgliedwelle, die mit einem den Schnellschluss der Ventilklappe bewirkenden mechanischen Schalter gekuppelt ist, dessen walzenförmiges Verriegelungselement von einer Nut aufgenommen wird und der koaxial zur Stellgliedwelle angeordnet ist. Es ist ein mit der Stellgliedwelle lösbar verbundener Kupplungsstutzen vorgesehen, der in dem Schalter angeordnet ist und sich im Verriegelungszustand an der Bohrungswand des Lagers sowie an dem Verriegelungselement abstützt, das einerseits von einer einzigen axial in die Mantelfläche des Kupplungsstutzens eingeordneten Nut aufgenommen wird und das andererseits in einer Gehäuseausnehmung angeordnet ist und welches auf einem in einem beweglichen käfigartig ausgebildeten Schieber geführten Wälzkörper rollenartig aufliegt, der zwischen dem Verriegelungselement und einem Nocken einer Schaltwelle so angeordnet ist, dass der Wälzkörper am Nocken der Schaltwelle und am Verriegelungselement eine Abrollbewegung ausführt und der beim Verriegeln durch ein am Schieber angreifendes Federmittel in die Verriegelungsstellung gelangt, und dass der Kupplungsstutzen auf seiner Oberfläche mindestens eine Abplattung aufweist.
Anstelle der Gehäuseausnehmung ist nach DD 0 206 196 A eine Leiste vorgesehen, die in dem Gehäuse des Schalters lösbar befestigt ist und auf der sich das Verriegelungselement abstützt und dass anstatt des Schiebers ein hülsenförmig käfigartig ausgebildeter und koaxial an der oder um die Schaltwelle gelagerter Drehschieber angeordnet ist. Der Wälzkörper ist bei dieser technischen Lösung im Verriegelungszustand gegenüber der gedachten Achse zwischen Kupplungsstutzen und Schaltwelle um einen definierten Betrag "e" nicht fluchtend und in einem Schlitz des hülsenförmig ausgebildeten Drehschiebers angeordnet.

Zwar realisiert dieser bekannte Stand der Technik nahezu Rollreibungsverhältnisse, jedoch greifen die drehmomentbedingten Reaktionskräfte an nur einem einzigen Verriegelungselement an, so dass die zulässigen Flächenpressungen mindestens zwei Baugrößen des Schaltgerätes erfordern, um die gesamte Baureihe der Sicherheitsabsperrventile abdecken zu können. Die Belastungssituation an der punktgelagerten Schaltwelle erzeugt darüber hinaus Biegemomente, die in Abhängigkeit mit den auftretenden Toleranzen, vor allem im Zusammenhang mit dem Absatz "e", die Höhe der Schaltkraft nachteilig beeinflussen, so dass die erreichten Vorteile aus der Rollreibung nahezu aufgezehrt werden.

Bei diesem Stand der Technik liegt der Erfindung die Aufgabe zugrunde, bei einer Schaltvorrichtung der genannten Art die Höhe der Schaltkräfte für die Auslösung des Ventils bei nahezu reiner Rollreibung unter gleichzeitiger Minimierung seiner Baugröße der für die Schaltkräfte relevanten Baugruppen herabzusetzen, den Standardisierungsgrad durch Reduzierung der Typen zu erhöhen und den technologischen Aufwand zu senken.

Diese Aufgabe wird durch ein Sicherheitsabsperrventil der eingangs genannten Gattung mit den kennzeichnenden Merkmalen des Anspruches 1 gelöst.

Vorteilhafte Ausgestaltungen des erfindungsgemäßen Sicherheitsabsperrventil sind den Unteransprüchen entnehmbar.

Das erfindungsgemäße Sicherheitsabsperrventil realisiert eine weitest gehende Rollreibung zwischen den Verriegelungselementen, Wälzkörper und Widerlager an jeweils zwei gegenüberliegenden Kontaktflächen, so dass die Widerlager nur mit sehr geringen drehmomentbedingten Radialkräften belastet werden.
Die Rasteinrichtung muss beim Schalten geringfügigere Schaltkräfte überwinden, wodurch dieselbe feinfühliger anspricht. Darüber hinaus ist eine Anpassung der Schaltkräfte an die Höhe des anliegenden Drehmomentes durch die Justierbarkeit der Lage des Käfigs und Widerlagers problemlos möglich.
Ein weiterer Vorteil des erfindungsgemäßen Sicherheitsabsperrventils besteht darin, dass durch eine einfache Montage des Anschlussflansches entweder am Deckel oder am Boden des Gehäuses wahlweise das erfindungsgemäße Sicherheitsabsperrventil für rechts- und linksdrehende Klappenwellen gleichermaßen geeignet ist. Das erfindungsgemäße Sicherheitsabsperrventil ist kompakt aufgebaut, ermöglicht einen lageunabhängigen Einbau und bietet Anschlussmöglichkeiten für mehrere Auslöser.

Die Erfindung soll nachstehend an einem Ausführungsbeispiel näher erläutert werden.

Es zeigt:
- Fig. 1: einen Schnitt der erfindungsgemäßen Schaltvorrichtung für eine rechtsdrehende Klappenwelle,
- Fig. 2: einen Schnitt entlang der Linie A-A der in Verriegelungslage befindlichen Schaltvorrichtung bei Offenstellung der Klappenwelle gemäß Fig. 1,
- Fig. 3: eine Einzelheit X der Fig. 2 in vergrößerter Darstellung,
- Fig. 4: eine Variante der Rückführung des Käfigs mittels Permanentmagneten,
- Fig. 5: eine Variante der Ausführung des Widerlagerkörpers in Form von leistenförmigen Stäben,
- Fig. 6: Ausführungsformen der Kontaktflächen der leistenförmige Stäbe,
- Fig. 7: einen Schnitt entlang der Linie A-A der im Entriegelungszustand befindlichen Schaltvorrichtung mit Formfederrückführung des Käfigs bei geschlossner Klappenwelle des Sicherheitsabsperrventils gemäß Fig. 1 und
- Fig. 8: einen Schnitt der Schaltvorrichtung für eine linksdrehende Klappenwelle,

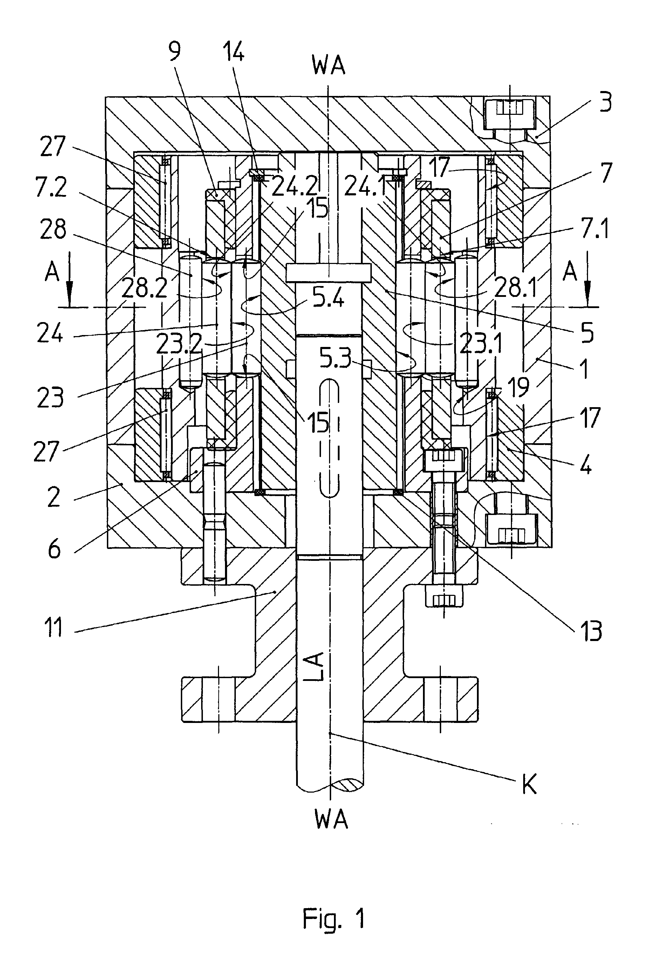

Die erfindungsgemäße Schaltvorrichtung für ohne Hilfsenergie und Hilfsgas arbeitende Sicherheitsabsperrventile besteht im Wesentlichen aus einem mit Boden **2** und Deckel **3** versehenen Gehäuse **1**, das über den am Boden **2** durch Schraubung befestigten Flansch **11** an das nicht dargestellte Sicherheitsabsperrventil angekuppelt ist.
Die Klappenwelle **K** besitzt einen sich in Längsrichtung **LR** der Welle **K** verlaufenden Mitnehmer **12,** der beim axialen Einschieben der Welle **K** in die Bohrung **5.1** der Rastbuchse **5** von einer an der inneren Mantelfläche der Welle **K** eingearbeiteten Nut **5.2** aufgenommen ist, so dass die Rastbuchse **5** koaxial zur Welle **K** liegt und die Rastbuchse **5** verdrehfest und formschlüssig auf der Welle **K** ist.
Die mit der Welle **K** drehende Rastbuchse **5** ist ihrerseits -wie Fig. 1 bis 3 zeigen- in einem am Boden **2** des Gehäuses **1** starr befestigten Schlitzzylinder **6** schwimmend gelagert. Dazu stützt sich einerseits die Rastbuchse **5** mittels eines Lagers **13** am Boden **2** und eines Lagers **14** an der Rastbuchse **5** ab. Der Schlitzzylinder **6** hält achsparallel in seinen jeweils diametral zur Wellenachse **WA** gelegenen Ausnehmungen **15** walzenförmige Verriegelungselemente **23,** die im äußeren Mantel **16** der Rastbuchse **5** eingearbeiteten Ausnehmungen **5.3** und **5.4** einliegen, wenn das anliegende Drehmoment die Klappenwelle **K** sperrt.
Der Schlitzzylinder **6** ist von einem hohlzylindrischen Lager **9** umgeben, in dem achsparallel zur Wellenachse **WA** ein hülsenförmiger Käfig **7** gehalten ist, der diametral gegenüber gelegene Wälzkörper **24** in Ausnehmungen **7.1** bzw. **7.2** drehbar aufnimmt und führt.
Ein hohlzylindrisches Widerlager **4**, das sich mit seinem äußeren Mantel **17** jeweils an einem bodenseitig und deckelseitig gelegenen achsparallel zur Klappenwelle **K** angeordneten Wälzlagerkörper **27** abstützt, hält in Ausnehmungen **19** jeweils einen walzenförmigen Widerlagerkörper **28**.

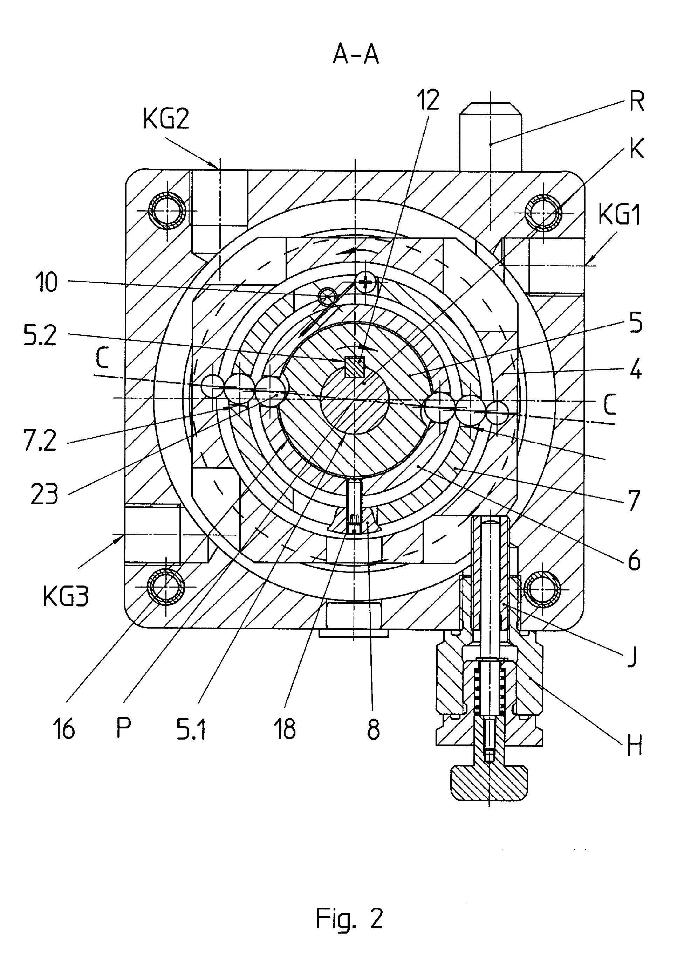

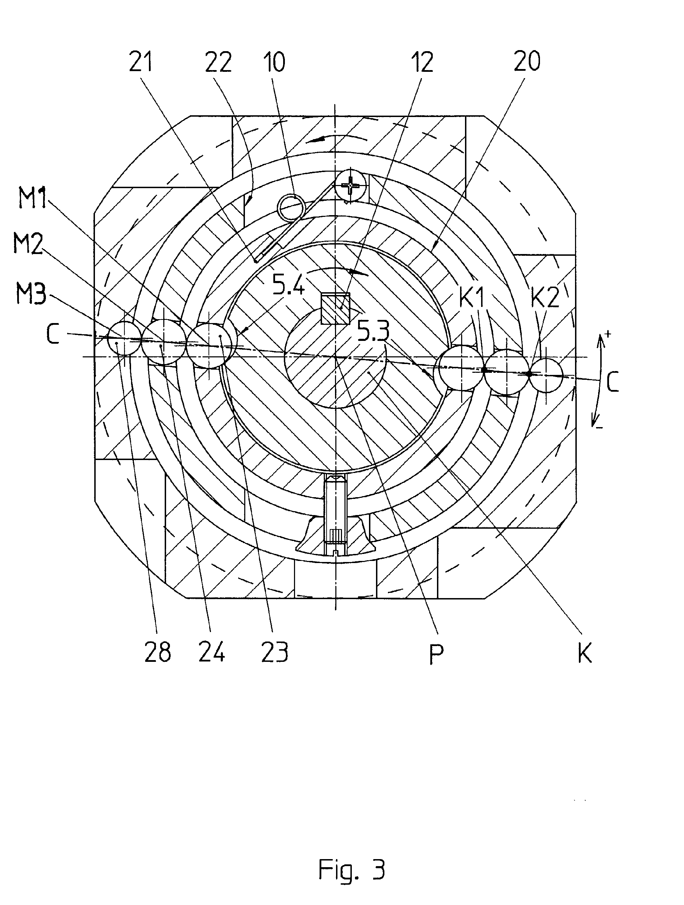

Die Wälzkörper **24** im Käfig **7** liegen wie in Fig. 2 und 3 dargestellt im verriegelten Zustand zwischen den Verriegelungselementen **23** und den walzenförmigen Widerlagerkörpern **28** achsparallel nebeneinander und berühren sich jeweils an ihren Kontaktflächen **23.1** bzw. **23.2, 24.1** bzw. **24.2** und **28.1** bzw. **28.2,** so dass die von der Drehung der Klappenwelle **K** verursachten Radialkräfte durch eine nahezu ideales Abrollen der Kontaktflächen auf die Widerlagerkörper **28** übertragen werden können. Die Mittelpunkte **M1, M2** und **M3** der Verriegelungselemente **23,** Wälzkörper **24** und Widerlagerkörper **28** sowie der Drehpunkt **P** der Welle **K** sind dann auf einer gemeinsamen Achse **C-C** angeordnet. Die Einstellung bzw. Justage der Berührungslinien **K1** und **K2** erfolgt dann um die Achse **C-C** in positiver oder negativer Richtung.

Schlitzzylinder **6** und Käfig **7** sind durch eine unter Zugspannung stehenden Formfeder **10** flexibel verbunden. Andererseits ist die Position des Käfigs **7** durch einen Gewindestift **18** und Justiermutter **8** einstellbar.
Die Formfeder **10** ist einerends in einer tangential zum äußeren Mantel **20** des Schlitzzylinders **6** eingearbeiteten Öffnung **21** und anderenends in einer Ausnehmung **22** des Käfigs **7** befestigt, so dass durch die Federkraft der Formfeder **10** der Käfig **7** tangential in Richtung des Schlitzzylinders **7** in seine festgelegte Position zurückgezogen wird. Durch Verstellen der Justiermutter **8** entlang dem senkrecht zwischen Käfig **7** und Schlitzzylinder **6** angeordneten Gewindestift **18** kann die Lage des Käfigs **7** entsprechend der für die anliegenden Drehmomente notwendigen Schaltkräfte in Bezug auf die Drehachse **WA** der Welle **K** in positiver oder negativer Richtung justiert werden.

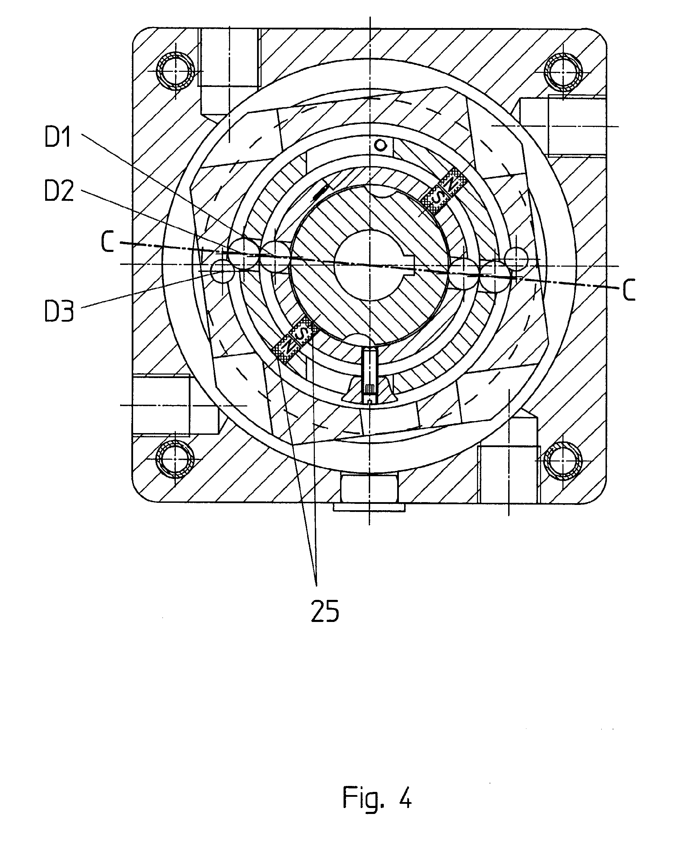

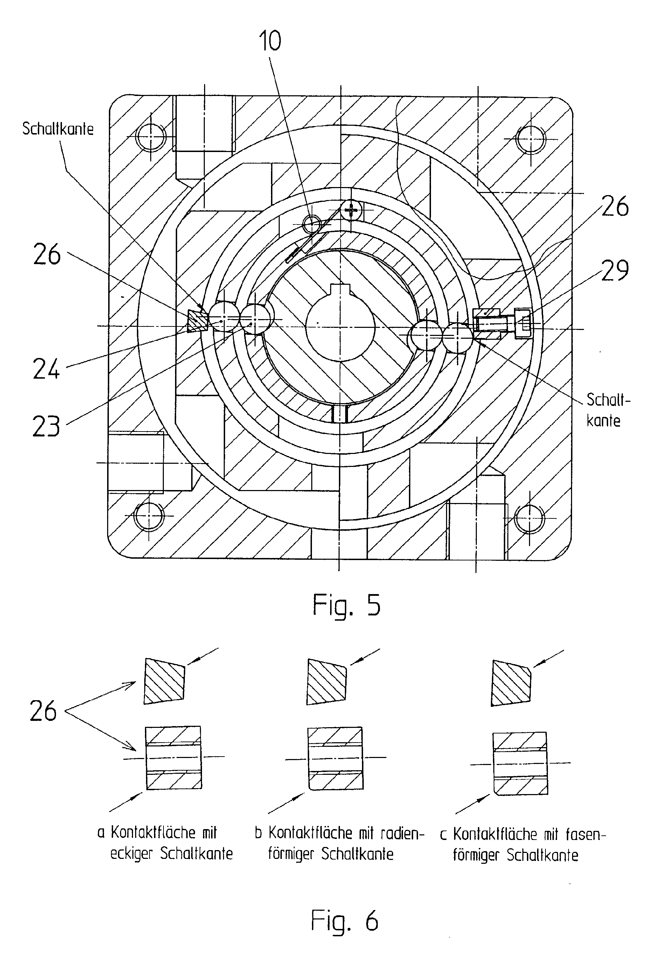

Fig. 4 zeigt die Variante einer Rückführung des Käfigs **7** mittels Magneten **25**, beispielsweise Permanentmagneten.
Mit einem Rücksteller **R** bzw. dem Handauslöser **H** (Fig. 2), der ebenfalls eine Justierschraube **J** enthält, lässt sich die Lage des Widerlagers **4** mit seinen Widerlagerkörpern **28** entsprechend einstellen.
Das anliegende Drehmoment der Klappenwelle **K** wird von den, in den Ausnehmungen **5.3** und **5.4** einliegenden Verriegelungselementen **23** aufgenommen. Die einwirkenden Radialkräfte werden über die entsprechenden Kontaktflächen der Wälzkörper **24** auf die Kontaktflächen **28.1** bzw. **28.2** der Widerlagerkörper **28** übertragen. Die Mittelpunkte **M1, M2** und **M3** liegen nicht mehr auf der gemeinsamen Achse **C-C.** Die Wälzkörper **24** rollen auf dem jeweiligen Widerlagerkörper **28** ab, da der Durchmesser **D3** des Widerlagerkörpers **28** geringer ist als der Durchmesser **D2** des Wälzkörpers **24**. Um eine gleichmäßige Übertragung der Kräfte von den Verriegelungselementen **23** auf die Wälzkörper **24** zu gewährleisten, sind die Durchmesser **D1** der Verriegelungselemente **23** und die Durchmesser **D2** der Wälzkörper **24** annähernd gleich gewählt.
Anstelle eines walzenförmigen Widerlagerkörpers **28** ist es aber auch möglich, wie Fig. 5 und 6 zeigen, leistenförmige Stäbe **26** mit entsprechend geformten Kontaktflächen einzusetzen, ohne die Erfindung zu verlassen.

Bei dem erfindungsgemäßen Wirkprinzip treten keine Haft- und Gleitreibungskräfte auf. Es sind nur die Rückstellmomente vom Widerlager **4** und Käfig **7** sowie die drehmomentbedingten Reibkräfte (nahezu Rollreibungskräfte) zwischen dem Widerlager **4** und den Wälzkörpern **24** zu überwinden.
Der Schaltvorgang zur Auslösung des Sicherheitsabsperrventils erfolgt mittels huberzeugender Auslöseeinrichtungen **KG1, KG2** und **KG3,** nachdem der Grenzwert der zu überwachenden Größe(n) über- oder unterschritten wird.

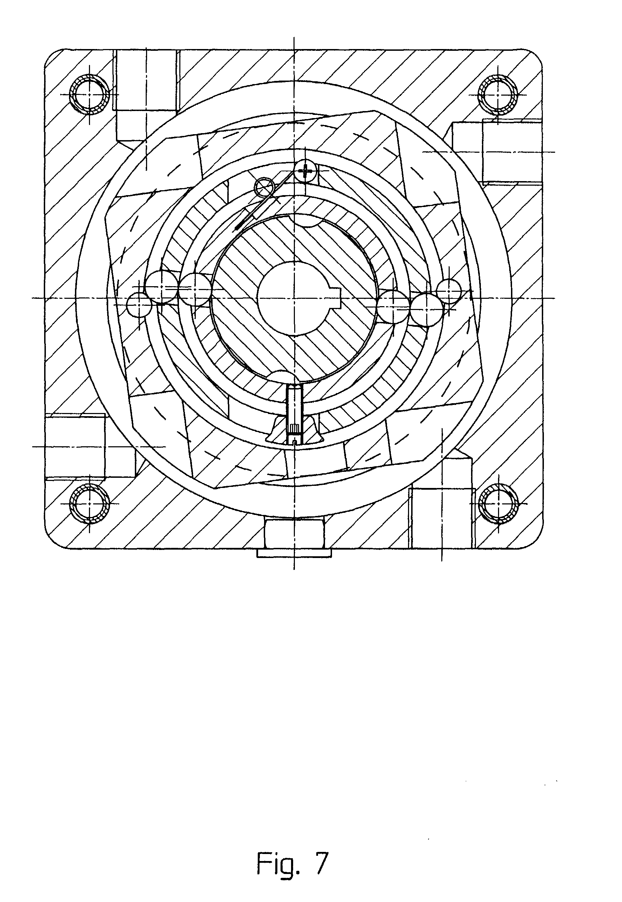

Das um den erforderlichen Drehwinkel ausgelenkte Widerlager **4** mit seinen Widerlagerkörpern **28** gibt die Verriegelung der mit der Rastbuchse **5** gekuppelten Klappenwelle **K** frei, die nicht dargestellte Ventilklappe des Sicherheitsabsperrventils erreicht die Schließlage und sperrt den freien Gasdurchgang ab. Fig. 7 zeigt die erfindungsgemäße Schaltvorrichtung im entriegelten Zustand.

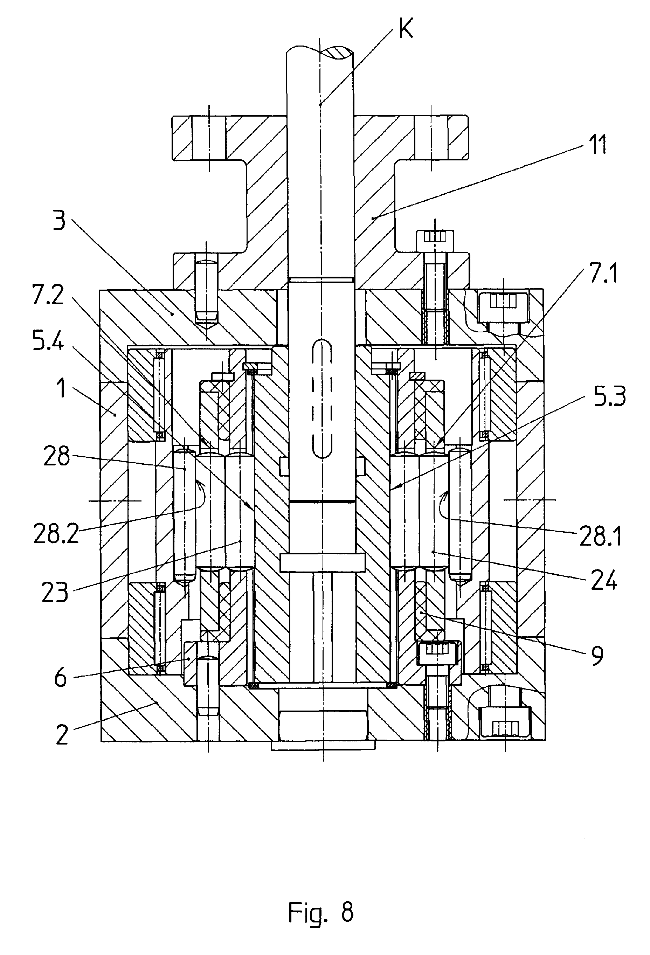

In Fig. 8 ist die Ausführung einer erfindungsgemäßen Schaltvorrichtung mit einer linksdrehenden Klappenwelle **K** dargestellt. Es muss lediglich der Flansch **11** vom Boden **2** gelöst und entsprechend am Deckel **3** befestigt werden. Die Klappenwelle **K** wird wie vordem beschrieben in die Rastbuchse **5** eingeführt und befestigt.

Hat bzw. haben die zu überwachende (n) Größe(n) ihren normalen Wert wieder erreicht, wird die Klappenwelle K mittels einer nicht gezeigten Betätigungseinrichtung wieder in die Offenstellung gebracht. Die erfindungsgemäße Schaltvorrichtung verriegelt die Klappenwelle K automatisch und das Sicherheitsabsperrventil ist in Bereitschaft.

### Aufstellung der verwendeten Bezugszeichen

- Gehäuse: 1
- Boden: 2
- Deckel: 3
- Widerlager: 4
- Rastbuchse: 5
- Bohrung von 5: 5.1
- Nut von 5: 5.2
- Äußere Ausnehmungen in 5: 5.3, 5.4
- Schlitzzylinder: 6
- Käfig: 7
- Ausnehmung in 7: 7.1, 7.2
- Justiermutter: 8
- Lager: 9
- Formfeder: 10
- Flansch: 11
- Mitnehmer der Klappenwelle K: 12
- Lager von 5: 13, 14
- Ausnehmungen im Schlitzzylinder 6: 15
- Äußerer Mantel der Rastbuchse 5: 16
- Äußerer Mantel des Widerlagers 4: 17
- Gewindestift: 18
- Ausnehmungen im Widerlager 4: 19
- Äußerer Mantel des Schlitzzylinders 6: 20
- Öffnung: 21
- Ausnehmungen im Käfig 7: 22
- Verriegelungselemente: 23
- Kontaktflächen der Verriegelungselemente 23: 23.1, 23.2
- Wälzkörper: 24
- Kontaktflächen der Wälzkörper 24: 24.1, 24.2
- Permanentmagnete: 25
- Leistenförmige Stäbe: 26
- Wälzlagerkörper für Widerlager 4: 27
- Widerlagerkörper: 28
- Kontaktflächen der Widerlagerkörper 28: 28.1, 28.2
- Achse von 23, 24, 28: C-C
- Durchmesser der Verriegelungselemente 23: D1
- Durchmesser der Wälzkörper 24: D2
- Durchmesser der Widerlagerkörper 28: D3
- Handauslöser: H
- Justierschraube für Widerlager 4: J
- Klappenwelle: K
- Auslöseeinrichtung: KG1, KG2, KG3
- Längsrichtung der Klappenwelle K: LR
- Mittelpunkt der Verriegelungselemente 23: M1
- Mittelpunkt der Wälzkörper 24: M2
- Mittelpunkt der Widerlagerkörper 28: M3
- Rücksteller: R
- Wellenachse: WA

## Patentansprüche

1. Schaltvorrichtung für ein ohne Hilfsenergie arbeitendes Sicherheitsabsperrventil, mit einer in einem mit Boden und Deckel versehenen Gehäuse drehbar gelagerten und eine Ventilklappe tragenden Welle, einer die Welle verriegelnden Rasteinrichtung, die eine zur Welle koaxial angeordnete und mit dieser drehfest verbundene zylindrische Rastbuchse, welche zwei axial verlaufende, im Mantel der Buchse, diametral gegenüberliegende Ausnehmungen zur Aufnahme von walzenförmigen, in einem Schlitzzylinder geführten Verriegelungselementen aufweist, und ein drehbewegliches hohlzylindrisches Schaltorgan enthält, an dessen innerer Mantelfläche axial verlaufende, den Verriegelungselementen zugeordnete Widerlagerkörper vorgesehen sind, und mindestens einem mit dem Schaltorgan mechanisch gekuppelten Auslöser, **dadurch gekennzeichnet, dass** zwischen den Verriegelungselementen **(23)** und den Widerlagerkörpern **(28)** in einem drehbaren hülsenförmigen Käfig **(7)** geführte, diametral gegenüberliegende Wälzkörper **(24)** zum Übertragen der radialen Schaltkräfte auf die Widerlagerkörper **(28)** so angeordnet sind, dass die Verriegelungselemente **(23),** Wälzkörper **(24)** und Widerlagerkörper **(28)** in ihren Berührungslinien **(K1;K2)** um eine durch die Mittelpunkte **(M1 ;M2; M3)** der Verriegelungselemente **(23),** Wälzkörper **(24),** Widerlagerkörper **(28)** und dem Drehpunkt **(P)** der Welle **(K)** geführte Achse **(C-C)** justierbar sind und auf oder im Mantel von Käfig **(7)** und Schlitzzylinder **(6)** verteilt angeordnet sind.

2. Schaltvorrichtung nach Anspruch 1, **dadurch gekennzeichnet, dass** sich die Verriegelungselemente **(23),** Wälzkörper **(24)** und Widerlagerkörper **(28)** an ihren Kontaktflächen **(23.1, 23.2; 24.1;24.2; 28.1, 28.2)** senkrecht zur Drehrichtung der Welle **(K)** axial aneinander rollend abstützen und in der Offenstellung die Wälzkörper **(24)** an den Widerlagerkörpern **(28)** entgegen der Drehrichtung der Welle **(K)** abrollbar angeordnet sind.

3. Schaltvorrichtung nach Anspruch 1 und 2, **dadurch gekennzeichnet, dass** zum Einstellen des Abstandes von der Achse (C-C) ein am Umfang des Schlitzzylinders **(6)** festgelegtes, zwischen Schlitzzylinder **(6)** und Käfig **(7)** angeordnetes Federmittel **(10)** und ein den Schlitzzylinder **(6)** und den Käfig **(7)** senkrecht miteinander verbindender Gewindestift **(18)** mit Justiermutter **(8)** vorgesehen ist.

4. Schaltvorrichtung nach Anspruch 3, **dadurch gekennzeichnet, dass** das Federmittel **(10)** eine Formfeder oder Zugfeder ist.

5. Schaltvorrichtung nach Anspruch 3, **dadurch gekennzeichnet, dass** anstelle der Formfeder **(10)** Magnete **(25)** vorgesehen sind.

6. Schaltvorrichtung nach Anspruch 5, **dadurch gekennzeichnet, dass** die Magnete **(25)** in ihrer Polarität diametral gegenüberliegend zueinander ausgerichtet auf oder im Mantel von Käfig **(7)** und Schlitzzylinder **(6)** verteilt angeordnet sind.

7. Schaltvorrichtung nach Anspruch 1 bis 6, **dadurch gekennzeichnet, dass** das Widerlager **(4)** durch eine separate Justierschraube **(J)** einstellbar ist.

8. Schaltvorrichtung nach Anspruch 1, **dadurch gekennzeichnet, dass** Verriegelungselemente **(23),** Wälzkörper **(24)** und Widerlagerkörper **(28)** aus rotationssymmetrischen Formkörpern mit glatter gehärteter Oberfläche, bestehen.

9. Schaltvorrichtung nach einem der vorhergehenden Ansprüche, **dadurch gekennzeichnet, dass** der Durchmesser **(D3)** gegenüber dem Durchmesser **(D2)** der Formkörper von Widerlagerkörper **(28)** und Wälzkörper **(24)** ein Verhältnis von 0,6 bis 0,8 und der Durchmesser **(D2)** gegenüber dem Durchmesser **(D1)** der Formkörper von Wälzlager **(24)** und Verriegelungselement **(23)** ein Verhältnis von etwa 1:1 hat.

10. Schaltvorrichtung nach einem der vorhergehenden Ansprüche, **dadurch gekennzeichnet, dass** anstelle der rotationssymmetrischen Formkörper für den Widerlagerkörper **(28)** leistenförmige Stäbe **(26)** mit einer zum Abrollen der Wälzkörpern **(24)** geeigneten Kontur vorgesehen sind.

11. Schaltvorrichtung nach Anspruch 10, **dadurch gekennzeichnet, dass** die Kontur eckig, radien- oder fasenförmig ausgebildet ist.

12. Schaltvorrichtung nach einem der vorgehenden Ansprüche, **dadurch gekennzeichnet, dass** die Rastbuchse **(5)** auf ihrer inneren Mantelfläche mit einer Nut **(5.2)** zur Aufnahme eines an der Welle **(K)** angeformten Mitnehmers **(12)** versehen ist, und dass die Rastbuchse **(5)** auf die Welle **(K)** für eine Rechts- oder Linksdrehung steckbar ausgebildet ist.

13. Schaltvorrichtung nach einem der vorhergehenden Ansprüche, **dadurch gekennzeichnet, dass** für eine rechts- oder linksdrehende Welle **(K)** ein am Boden **(2)** oder am Deckel **(3)** befestigter Flansch **(11)** austauschbar angeordnet ist.
